# EUROPEAN PATENT APPLICATION

(11) **EP 4 796 452 A1**
(43) Date of publication of application: **26.08.2026**
(21) Application number: 24879751.6
(22) Date of filing: 16.10.2024
(51) Int. Cl.: B65D 23/10, B65D 1/02

(54) **RESIN CONTAINER, PRODUCTION DEVICE FOR RESIN CONTAINER, BLOW MOLDING MOLD, AND TEMPERATURE CONTROL POT**

(30) Priority: 16.10.2023 JP 2023178497
(71) Applicant: Nissei ASB Machine Co., Ltd., Komoro-shi, Nagano 384-8585 (JP)
(72) Inventor: WAKAO, Kentaro, Komoro-shi, Nagano 384-8585 (JP); KAWAMURA, Ryo, Komoro-shi, Nagano 384-8585 (JP); OGIHARA, Manabu, Komoro-shi, Nagano 384-8585 (JP)
(74) Representative: Novagraaf International SA
(86) International application number: PCT/JP2024/036895
(87) International publication number: WO 2025/084330

(57) **Abstract**

A body portion (20) and a grip portion (40) form a through space (S) extending through in a first direction that intersects a central axis (Ax) of a resin container (1). A thick portion (50) having a thickness greater than an average thickness (tm1, tm2) of the body portion (20) and the grip portion (40) is formed in at least a part of the through space (S) in a circumferential direction in the body portion (20) and the grip portion (40). The thick portion (50) protrudes toward the inner side of the through space (S).

## Description

### TECHNICAL FIELD

The present disclosure relates to a resin container, a manufacturing apparatus for the resin container, a blow molding mold, and a temperature adjusting pot.

### BACKGROUND ART

PTL 1 discloses a resin container including a hollow grip.

### CITATION LIST

### PATENT LITERATURE

PTL 1: JP 2014-519454 A

### SUMMARY OF INVENTION

### TECHNICAL PROBLEM

In a resin container including a hollow grip, a bonding portion (pinch-off portion) is formed during manufacturing in a handle portion and a container body portion facing the handle portion. In comparison with a resin container with no hollow grip, that is, a resin container including no pinch-off portion, the pinch-off portion of a resin container with a hollow grip may be a weak point in terms of strength. In addition, in this type of container, a surface of the body portion facing the hollow handle may also be a weak point in terms of strength when the container is dropped.

An object of the present disclosure is to provide a resin container with increased strength as a resin container including a hollow grip, and a manufacturing apparatus, a blow molding mold, and a temperature adjusting pot for manufacturing the resin container.

### SOLUTION TO PROBLEM

A resin container according to an aspect of the present disclosure includes:
a neck portion forming a liquid inlet/outlet portion;
a body portion connected to the neck portion;
a bottom portion connected to the body portion and configured to close a lower end of the body portion; and
a grip portion connected to the body portion and formed as a hollow body in communication with an interior of the body portion, in which
the body portion and the grip portion form a through space extending through in a first direction that intersects a central axis of the resin container,
a thick portion having a thickness greater than an average thickness of the body portion and the grip portion is formed in at least a part of the through space in a circumferential direction in the body portion and the grip portion, and
the thick portion protrudes toward an inner side of the through space.

In a manufacturing apparatus for a resin container according to an aspect of the present disclosure, the resin container includes:
a neck portion forming a liquid inlet/outlet portion;
a body portion connected to the neck portion;
a bottom portion connected to the body portion and configured to close a lower end of the body portion; and
a grip portion connected to the body portion and formed as a hollow body in communication with an interior of the body portion, in which
the body portion and the grip portion form a through space extending through in a first direction that intersects a central axis of the resin container,
a thick portion having a thickness greater than an average thickness of the body portion and the grip portion is formed in at least a part of the through space in a circumferential direction in the body portion and the grip portion, and
the thick portion protrudes toward an inner side of the through space, the manufacturing apparatus including:
   a blow molding unit configured to perform blow molding of a resin container by performing biaxial stretch blow molding of a preform, in which
   the blow molding unit includes a blow molding mold configured to define an external shape of a resin container, the blow molding mold being a pair of split molds,
   the blow molding mold includes a protruding portion configured to form a portion to be cut off that serves as the through space when the pair of split molds are brought closer to each other in the first direction and the portion to be cut off is cut off in the body portion and the grip portion, and
   in the protruding portion, a thick portion formation portion configured to form the thick portion at a connecting portion with the portion to be cut off is formed.

A blow molding mold according to an aspect of the present disclosure is provided in a blow molding apparatus configured to manufacture a resin container by performing blow molding of a preform made of a resin, the resin container including:
a neck portion forming a liquid inlet/outlet portion;
a body portion connected to the neck portion;
a bottom portion connected to the body portion and configured to close a lower end of the body portion; and
a grip portion connected to the body portion and formed as a hollow body in communication with an interior of the body portion, in which
the body portion and the grip portion form a through space extending through in a first direction that intersects a central axis of the resin container,
a thick portion having a thickness greater than an average thickness of the body portion and the grip portion is formed in at least a part of the through space in a circumferential direction in the body portion and the grip portion, the thick portion protruding toward an inner side of the through space, and
the thick portion protrudes toward the inner side of the through space, in which the blow molding mold is a pair of split molds,
the blow molding mold includes a protruding portion configured to form a portion to be cut off that serves as the through space when the pair of metal molds are brought closer to each other in the first direction and the portion to be cut off is cut off in the body portion and the grip portion, and
in the protruding portion, a thick portion formation portion configured to form the thick portion at a connecting portion with the portion to be cut off is formed.

A temperature adjusting pot according to an aspect of the present disclosure is configured to adjust a temperature of a preform made of a resin to a temperature suitable for blow molding, the temperature adjusting pot including:
a bottom portion temperature adjusting portion provided to face a bottom portion of the preform, and
a body portion temperature adjusting portion provided above the bottom portion temperature adjusting portion to face a body portion of the preform, in which
the bottom portion temperature adjusting portion is configured such that a distance to the body portion temperature adjusting portion is changeable when a spacer is inserted between the body portion temperature adjusting portion and the bottom portion temperature adjusting portion.

In a manufacturing method for a resin container according to an aspect of the present disclosure, the resin container includes:
a neck portion forming a liquid inlet/outlet portion;
a body portion connected to the neck portion;
a bottom portion connected to the body portion and configured to close a lower end of the body portion; and
a grip portion connected to the body portion and formed as a hollow body in communication with an interior of the body portion, in which
the body portion and the grip portion form a through space extending through in a first direction that intersects a central axis of the resin container,
a thick portion having a thickness greater than an average thickness of the body portion and the grip portion is formed in at least a part of the through space in a circumferential direction in the body portion and the grip portion, and
the thick portion protrudes toward an inner side of the through space, the manufacturing method including:
   performing blow molding of a resin container by performing biaxial stretch blow molding of a preform, in which
   the performing blow molding is performed using a blow molding mold configured to define an external shape of a resin container, the blow molding mold being a pair of split molds,
   the blow molding mold includes a protruding portion configured to form a portion to be cut off that serves as the through space when the pair of split molds are brought closer to each other in the first direction and the portion to be cut off is cut off in the body portion and the grip portion, and
   in the protruding portion, a thick portion formation portion configured to form the thick portion at a connecting portion with the portion to be cut off is formed.

### ADVANTAGEOUS EFFECTS OF INVENTION

According to the present disclosure, it is possible to provide a resin container with increased strength as a resin container including a hollow grip, and a manufacturing apparatus, a blow molding mold, and a temperature adjusting pot for manufacturing the resin container.

### BRIEF DESCRIPTION OF DRAWINGS

FIG. 1 is a front view of a resin container according to a present embodiment.
FIG. 2 is a sectional view taken along line II-II of FIG. 1.
FIG. 3 is a front view of a resin container according to a variation.
FIG. 4 is a cross-sectional view taken along line IV-IV of FIG. 3.
FIG. 5 is a diagram illustrating an example of a manufacturing apparatus for the resin container.
FIG. 6 is a diagram illustrating an example of a manufacturing method for the resin container.
FIG. 7 is a diagram illustrating an example of a preliminary blow molding portion.
FIG. 8 is a diagram illustrating an example of a final blow molding portion.
FIG. 9 is a diagram illustrating an example of a flat plate portion formed by a protruding portion.
FIG. 10 is an enlarged view of a tip end of the protruding portion.
FIG. 11 is a diagram illustrating an example of final blow molding at the final blow molding portion.
FIG. 12 is a diagram illustrating an example of a temperature adjusting unit.
FIG. 13 is a diagram illustrating an example of a preliminary blow molding portion according to a variation.

### DESCRIPTION OF EMBODIMENTS

Hereinafter, an embodiment of the present disclosure will be described with reference to the drawings. Dimensions of the members illustrated in the drawings may be different from actual dimensions of the members for convenience of description.

In the accompanying drawings, an arrow F indicates a forward direction of the illustrated structure. An arrow B indicates a backward direction of the illustrated structure. An arrow U indicates an upward direction of the illustrated structure. An arrow D indicates a downward direction of the illustrated structure. An arrow R indicates a rightward direction of the illustrated structure. An arrow L indicates a leftward direction of the illustrated structure. These expressions relating to the directions are used for convenience of description, and do not limit the posture or direction of the illustrated structure in an actual usage state.

The term "front-back direction" used in the present specification refers to a direction along the forward direction and the backward direction described above. The term "up-down direction" used in the present specification refers to a direction along the upward direction and the downward direction described above. The term "left-right direction" used in the present specification refers to a direction along the leftward direction and the rightward direction described above.

### Resin Container

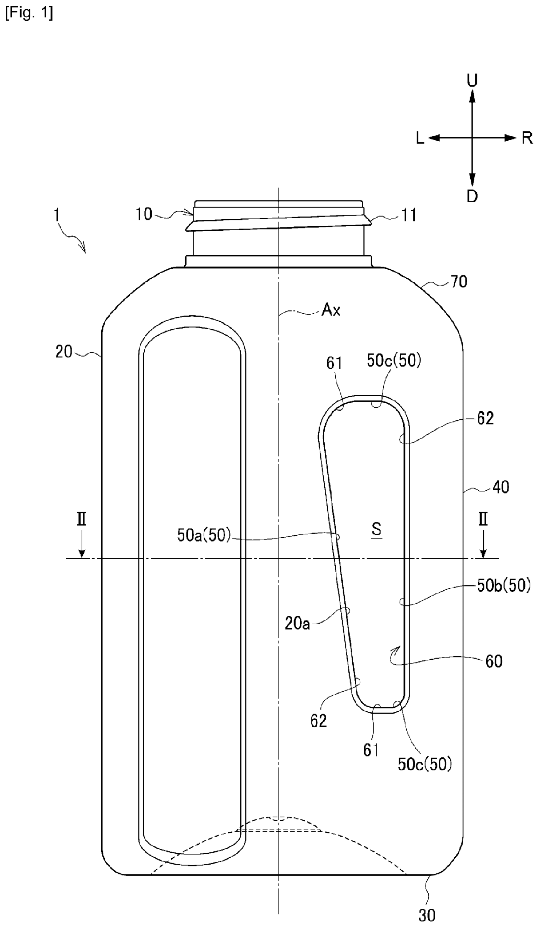

FIG. 1 is a front view of a resin container 1 according to the present embodiment. In the present embodiment, the resin forming the resin container 1 is a thermoplastic resin, preferably a copolyester resin. An example of the copolyester resin is Tritan (tradename) (a copolyester manufactured by Eastman Chemical Company, a polyester copolymer using cyclobutanediol as a monomer). Other examples of the resin forming the resin container 1 include, for example, glycol-modified polycyclohexylenedimethylene terephthalate (PCTG), polycyclohexanedimethylene terephthalate/isophthalate copolymer resin (PCTA), polyethylene terephthalate (PET), polyethylene naphthalate (PEN), polycyclohexanedimethylene terephthalate (PCT), polypropylene (PP), polyethylene (PE), low-density polyethylene (LDPE), linear low-density polyethylene (LLDPE), polycarbonate (PC), polyether sulfone (PES), polyphenyl sulfone (PPSU), polystyrene (PS), cyclic olefin polymer (COP/COC), polymethyl methacrylate: acrylic (PMMA), polylactic acid (PLA), and the like.

As exemplified in FIG. 1, the resin container 1 includes a neck portion 10, a body portion 20, a bottom portion 30, and a grip portion 40. In addition, the resin container 1 may include a shoulder 70 connecting the neck portion 10 and the body portion 20, and having a diameter increasing toward the body portion 20. The resin container 1 is manufactured by biaxial stretch blow molding (stretch blow molding).

The neck portion 10 forms a liquid inlet/outlet portion in the resin container 1. A screw portion 11 for attaching a lid (not illustrated in the drawing) may be formed on the outer surface of the neck portion 10.

The body portion 20 is connected to the neck portion 10. The body portion 20 extends one full revolution around a central axis Ax of the resin container 1, thereby forming a side surface of the resin container 1.

The bottom portion 30 is connected to the body portion 20. The bottom portion 30 is configured to close the lower end of the body portion 20. The body portion 20 and the bottom portion 30 define a liquid containing space in the resin container 1.

The grip portion 40 is connected to the body portion 20. The grip portion 40 is formed as a hollow body in communication with an interior of the body portion 20.

As exemplified in FIG. 1, the body portion 20 and the grip portion 40 form a through space S extending through in a first direction that intersects the central axis Ax of the resin container 1. Note that in FIG. 1, the first direction is a direction from a rear side, which is a depth direction in the drawing, toward a front side, which is a near side in the drawing. In other words, FIG. 1 illustrates the resin container 1 as viewed from the first direction.

Since the through space S is formed, the grip portion 40 can be grasped by the palm and fingers. In this manner, the resin container 1 can be easily carried by hand. In addition, when the resin container 1 contains a beverage such as water in an amount of about 1.5 to 3.0 liters, the resin container 1 can be easily handled during use for drinking.

A thick portion 50 is formed in at least a part of the through space S in the circumferential direction in the body portion 20 and the grip portion 40. In the present embodiment, the thick portion 50 is formed over the entire circumference of the through space S in the body portion 20 and the grip portion 40.

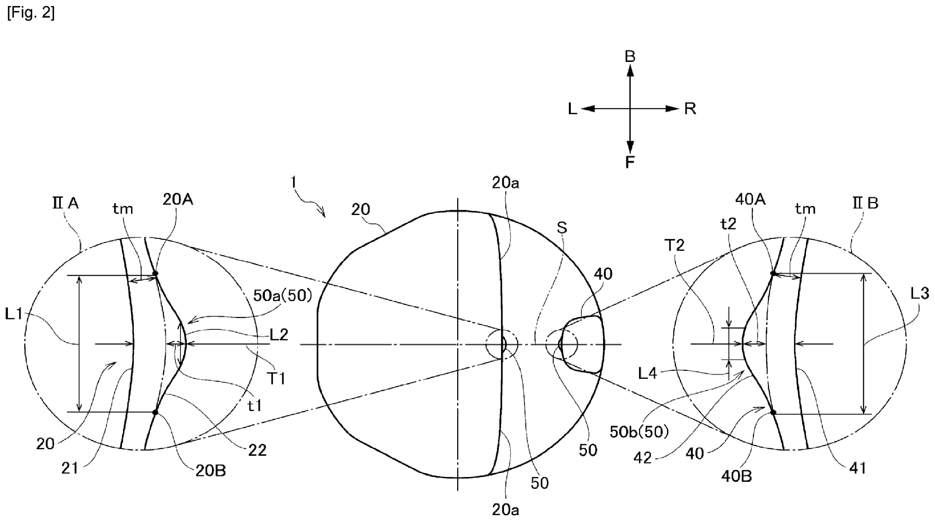

FIG. 2 is a sectional view taken along line II-II of FIG. 1. As exemplified in FIG. 2, the thick portion 50 of the body portion 20 and the grip portion 40 is formed to protrude toward an inner side of the through space S from the outer surface of the grip portion 40 or the body portion 20. Note that in the following description, for convenience, the thick portion 50 formed at the body portion 20 is referred to as a body thick portion 50a. The thick portion 50 formed at the grip portion 40 is referred to as a grip thick portion 50b. The thick portion 50 formed at a horizontal portion 61 (described below), which is a connecting portion of the body portion 20 and the grip portion 40, is referred to as a horizontal thick portion 50c.

An enlarged view IIA illustrates a partially enlarged view of the body portion 20. As exemplified in the enlarged view IIA, the portion where the thick portion 50 (the body thick portion 50a) is formed in the body portion 20 has a larger dimension from an inner surface 21 of the body portion 20 to an outer surface 22 of the body portion 20 than the portion where the thick portion 50 is not formed. In other words, a thickness t1 of the thick portion 50 of the body portion 20 is greater than an average thickness tm1 of the body portion 20 located on the through space S side (more specifically, a flat surface 20a).

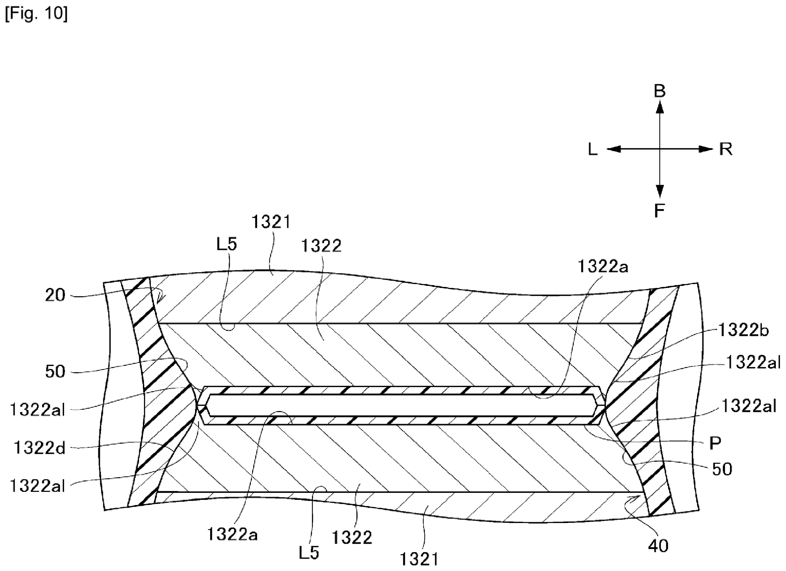

In the enlarged view IIA, the positions of both ends where the thick portion 50 (50a) begins to protrude from the surface of the body portion 20 are referred to as a first thick end portion 20A and a second thick end portion 20B. The first thick end portion 20A and the second thick end portion 20B are portions of the thick portion 50 with a thickness equal to the average thickness tm1 of the body portion 20, for example. The average thickness tm1 of the body portion 20 may be an average thickness of the body portion 20 on the through space S side excluding the thick portion 50. The first thick end portion 20A and the second thick end portion 20B may be formed as marks formed by a protruding portion 1322 (see FIG. 10), which is an insert mold.

The distance in the first direction between the first thick end portion 20A and the second thick end portion 20B is referred to as a dimension (length, width) L1 in the first direction of the thick portion 50 (50a). In this case, a dimension t1 in the thickness direction of the thick portion 50 is smaller than the dimension L1 in the first direction. For example, the dimension (thickness) t1 in the thickness direction of the thick portion 50 is 1.0 mm to 4.0 mm, for example. When the thickness of the body portion 20 including the thick portion 50 is T1, T1 = tm1 + t1 holds. The dimension L1 in the first direction may be a region extending from the center of the thick portion 50 to the body portion 20 on both sides (more specifically, the flat surface 20a), and may be 6.0 mm to 10.0 mm, for example. Note that the center of the thick portion 50 refers to, in a horizontal cross section of the body portion 20, a center of a portion where the thick portion 50 protrudes most toward the through space S. Alternatively, the dimension L1 in the first direction may be a distance between the first thick end portion 20A and the second thick end portion 20B formed as a mark with the protruding portion 1322 (see FIG. 10), which is an insert mold, and in this case, the dimension L1 may be 12.0 mm to 40.0 mm, for example. The dimension L1 may be 1.5 times or greater and 10 times or smaller the dimension t1. The tip end portion of the thick portion 50 on the through space S side may be formed in a flat shape. For example, a dimension (length, width) L2 in the first direction of the tip end portion of the thick portion 50 may be 0.8 mm to 3.5 mm. The dimension L1 may be eight times or greater and 20 times or smaller the dimension L2.

Here, an enlarged view IIB illustrates a partially enlarged view of the grip portion 40. As exemplified in the enlarged view IIB, the portion where the thick portion 50 (the grip thick portion 50b) is formed in the grip portion 40 has a larger dimension from an inner surface 41 of the grip portion 40 to an outer surface 42 of the grip portion 40 than the portion where the thick portion 50 is not formed. In other words, a thickness T2 of the grip portion 40 including the thick portion 50 is greater than an average thickness tm2 of the grip portion 40 located on the through space S side.

In the enlarged view IIB, the positions of both ends where the thick portion 50 (50b) begins to protrude from the surface of the grip portion 40 are referred to as a third thick end portion 40A and a fourth thick end portion 40B. The third thick end portion 40A and the fourth thick end portion 40B are portions of the thick portion 50 with a thickness equal to the average thickness tm2 of the grip portion 40, for example. The average thickness tm2 of the grip portion 40 may be an average thickness of the grip portion 40 on the through space S side excluding the thick portion 50. The third thick end portion 40A and the fourth thick end portion 40B may be formed as marks formed by the protruding portion 1322 (see FIG. 10), which is an insert mold.

The distance in the first direction between the third thick end portion 40A and the fourth thick end portion 40B is referred to as a dimension (length, width) L3 in the first direction of the thick portion 50 (50b). In this case, a dimension (thickness) t2 in the thickness direction of the thick portion 50 is smaller than the dimension L3 in the first direction. For example, the dimension t2 in the thickness direction of the thick portion 50 may be 1.0 mm to 4.0 mm, for example. When the thickness of the grip portion 40 including the thick portion 50 is T2, T2 = tm2 + t2 holds. The dimension L3 in the first direction may be a region extending from the center of the thick portion 50 to the body portion 20 on both sides (more specifically, the flat surface 20a), and may be 6.0 mm to 10.0 mm, for example. Note that the center of the thick portion 50 refers to, in a horizontal cross section of the body portion 20, a center of a portion where the thick portion 50 protrudes most toward the through space S. Alternatively, the dimension L3 in the first direction may be a distance between the third thick end portion 40A and the fourth thick end portion 40B formed as a mark with the protruding portion 1322 (see FIG. 10), which is an insert mold, and in this case, the dimension L3 may be 12.0 mm to 40.0 mm, for example. The dimension L3 may be 1.5 times or greater and 10 times or smaller the dimension t2. The tip end portion of the thick portion 50 on the through space S side may be formed in a flat shape. For example, a dimension (length, width) L4 in the first direction of the tip end portion of the thick portion 50 may be 0.8 mm to 3.5 mm. The dimension L3 may be eight times or greater and 20 times or smaller the dimension L4.

The dimension t1 of the thick portion 50 in the body portion 20 may be the same as the dimension t2 of the thick portion 50 in the grip portion 40. The dimension L1 of the thick portion 50 in the body portion 20 may be the same as the dimension L3 of the thick portion 50 in the grip portion 40. The dimension L2 of the tip end portion of the thick portion 50 in the body portion 20 may be the same as the dimension L4 of the thick portion 50 of the tip end portion of the grip portion 40. For example, in the resin container 1 of the first embodiment, the thick portion 50 is formed over the entire circumference of a peripheral portion 60 of the through space S in the body portion 20 and the grip portion 40. In this case, the thick portion 50 formed over the entire circumference of the peripheral portion 60 may be formed so as to have the same cross-sectional shape and dimensions at any part of the peripheral portion 60.
Note that the direction orthogonal to the thickness direction of the thick portion 50 may be defined as the width direction of the thick portion 50. In this case, the largest dimension in the width direction of the body thick portion 50a is the dimension L1 in the first direction, and the largest dimension in the width direction of the grip thick portion 50b is the dimension L3 in the first direction.

The peripheral portion 60 includes the horizontal portion 61 and a vertical portion 62. The horizontal portion 61 is a portion of the peripheral portion 60 extending along the left-right direction, which is the radial direction of the resin container 1. The vertical portion 62 is a portion of the peripheral portion 60 extending along the up-down direction, which is a center axis direction of the resin container 1. Note that "extending along the radial direction" indicates that the relevant portion is parallel to the "radial direction", or intersects the "radial direction" at an angle smaller than that with any direction orthogonal to the "radial direction". "Extending along the center axis direction" indicates that the relevant portion is parallel to the "center axis direction", or intersects the "center axis direction" at an angle smaller than that with any direction orthogonal to the "center axis direction".

In general, in the grip portion 40 and the body portion 20 facing the grip portion 40, a pinch-off portion (a portion corresponding to the peripheral portion 60 of the present embodiment), which is formed by a bonded resin film during formation of the through space S, may have a lower strength in the resin container 1. In addition, the flat surface 20a, which is the surface of the body portion 20 facing (opposite to) the handle portion 40, may also be a weak point in terms of strength when the container is dropped. The flat surface 20a facing the handle portion 40 is shaped into a flat shape extending in the vertical direction and the depth direction in the drawing.

In the resin container 1 according to the present embodiment, since the thick portion 50 protruding toward the inner side of the through space S is formed in at least a part of the through space S in the circumferential direction in the body portion 20 and the grip portion 40, the rigidity of the portion where the thick portion 50 is formed is high. In this manner, the body portion 20 and the grip portion 40 are less likely to deform, and thus the strength can be further increased in the resin container 1.

In the resin container 1 according to the present embodiment, since the thick portion 50 can be provided with a large width so as to extend across the pinch-off portion at the pinch-off portion in the grip portion 40 and the body portion 20 facing the grip portion 40, the rigidity of the portion where the thick portion 50 is formed is high.

In addition, the resin forming the resin container 1 of the present embodiment may be copolyester resin. Copolyester resins have the feature that they do not elute an endocrine disruptor (bisphenol A, BPA) unlike polycarbonate (PC). On the other hand, a container manufactured from a copolyester resin has lower impact resistance upon dropping (drop strength) than a container manufactured from PC. For example, when a drop impact resistance test is conducted on a container that does not include the thick portion 50, breakage of the container due to a water hammer phenomenon occurs in a PC container having a size of 20 L or more; however, in a container made of a copolyester resin such as Tritan, breakage occurs even in a container having a size of 1.5 L or less. Since the thick portion 50 is formed at the pinch-off portion in the resin container 1 of the present embodiment, impact resistance of the resin container 1 can be improved even when a material having low impact resistance is used.

Note that the impact resistance of the resin container 1 can be measured by impact resistance test. The impact resistance test is a test in which the container is filled with the same amount of liquid as in use and is then sealed with a lid, after which the container is dropped multiple times from a predetermined height (e.g., 2 meters) to confirm whether the resin container 1 can be safely used without being damaged (without cracking). When the resin container 1 is dropped, an impact (reaction force) due to collision with the ground is applied to the liquid in the container, and the liquid transmits the impact to the flat surface 20a (water hammer phenomenon). Since the flat surface 20a is a relatively large surface, it tends to receive a large impact force. Therefore, the flat surface 20a is likely to undergo bulging deformation toward the through space S, thereby causing breakage (cracking). Since the thick portion 50 having a large width is formed on the flat surface 20a, rigidity of the flat surface 20a is improved. In this manner, the amount of bulging deformation of the flat surface 20a due to the impact is reduced, and thus breakage of the flat surface 20a is less likely to occur, thereby improving the impact resistance of the resin container 1.

### Variation of Resin Container

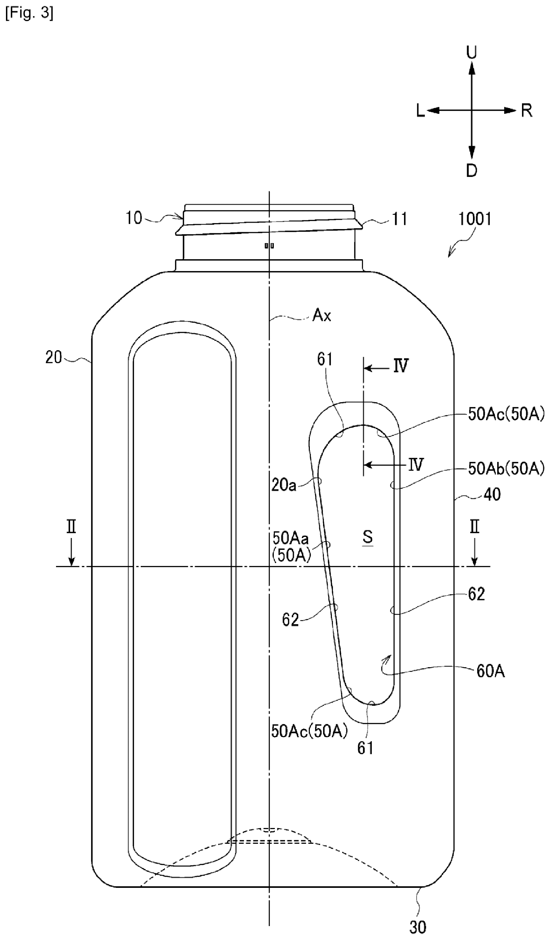

FIG. 3 is a front view of a resin container 1001 according to a variation. In the resin container 1001 according to the variation, a thick portion 50A is formed over the entire circumference of a peripheral portion 60A as in the resin container 1 according to the present embodiment. However, the resin container 1001 according to the variation is different from the above-described resin container 1 according to the embodiment in that the dimension of the thick portion 50A formed in a portion of the peripheral portion 60A is different from the dimension of the thick portion 50A in other portions. As in the resin container 1, the peripheral portion 60A includes the horizontal portion 61 and the vertical portion 62. Here, the thick portion 50A formed at the body portion 20 is a body thick portion 50Aa. The thick portion 50A formed at the grip portion 40 is a grip thick portion 50Ab. The thick portion 50A formed in the horizontal portion 61, which is the connecting portion of the body portion 20 and the grip portion 40, is a horizontal thick portion 50Ac.

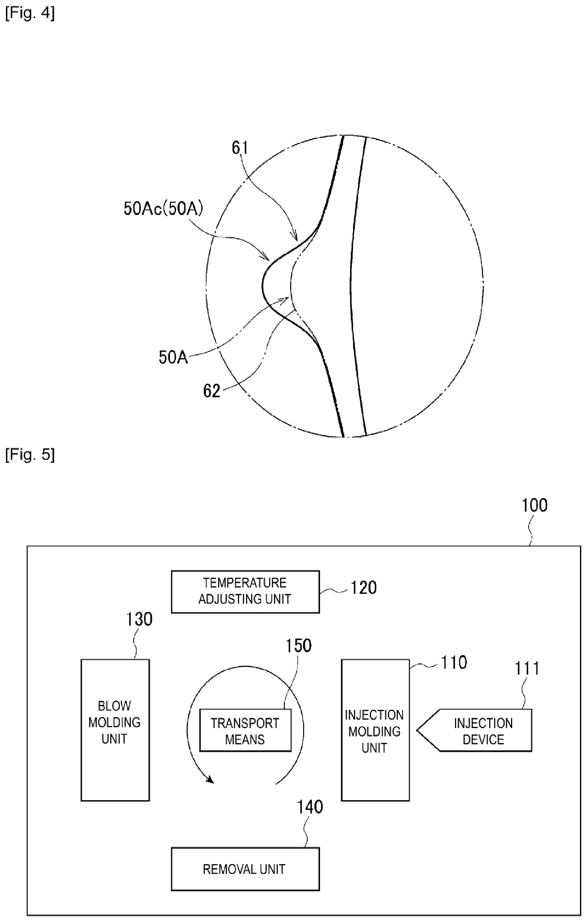

FIG. 4 is a cross-sectional view taken along line IV-IV of FIG. 3. FIG. 4 illustrates the thick portion 50A in the horizontal portion 61 (the horizontal thick portion 50Ac) with a solid line, and illustrates, in a virtually overlapping manner, the thick portion 50A in the vertical portion 62 with a chain double-dashed line. As exemplified in FIG. 4, the thick portion 50A formed in the horizontal portion 61 has a larger dimension in the thickness direction than that of the thick portion 50A formed in the vertical portion 62. For example, the horizontal thick portion 50Ac may have a thickness 1.5 times or greater and five times or less that of the thick portion 50A (50Aa, 50Ab) formed in the vertical portion 62.

Depending on the shape of the container, strength of a part of the pinch-off portion may be lower than that of other parts of the pinch-off portion. For example, in the resin container 1001 according to the variation, it is assumed that the horizontal portion 61 is a portion having lower strength than that of the vertical portion 62. In this case, since the dimension in the thickness direction of the thick portion 50A in the horizontal portion 61 is greater than the dimension in the thickness direction of the thick portion 50A in the vertical portion 62, rigidity in the vertical portion 62 is particularly improved. In this manner, the strength of the peripheral portion 60A can be partially improved.

In the resin container 1001 of the variation, since the thick portion 50A formed in a portion of the peripheral portion 60A has a dimension different from that of the thick portion 50A formed in another portion in the peripheral portion 60A, the strength in the peripheral portion 60A can be partially improved. When the strength of the pinch-off portion is partially insufficient, it is not necessary to change dimensions of the entire thick portion 50A of the peripheral portion 60A, and thus the amount of resin material required for manufacturing the resin container 1001 can be reduced.

For example, by making the horizontal portion 61 thicker than the vertical portion 62, the rigidity of the resin container 1001 around the through space S can be further increased. In this manner, the amount of bulging deformation in an upper part of the body portion 20 on the through space S side due to dropping is reduced, and the occurrence of cracking of the resin container 1001 due to the bulging deformation can be suppressed.

In addition, at least any of the body thick portion 50Aa, the grip thick portion 50Ab, or the two horizontal thick portions 50Ac may be thicker than other portions in the thick portion 50A. In this case, the strength of the peripheral portion 60A can be partially increased, and the occurrence of cracking of the resin container 1001 due to the bulging deformation can be suppressed. Further, the thickness may partially vary within each of the body thick portion 50Aa, the grip thick portion 50Ab, and the two horizontal thick portions 50Ac in the thick portion 50A. For example, in the body thick portion 50Aa, the body thick portion 50Aa on the upper side may be thicker than the body thick portion 50Aa on the lower side. In this manner, improvement in strength of the peripheral portion 60A is expected.

Note that a thick portion may be provided in a portion of a peripheral portion of the resin container, without forming a thick portion in another portion of the peripheral portion.

### Manufacturing Apparatus and Manufacturing Method for Resin Container

Next, a manufacturing apparatus 100 for the resin container 1 is described. FIG. 5 is a diagram illustrating an example of the manufacturing apparatus 100 for the resin container 1. The manufacturing apparatus 100 is a blow molding apparatus that can perform biaxial stretch blow molding. The manufacturing apparatus 100 may be a blow molding apparatus that can perform biaxial stretch blow molding (a one-step method, a hot parison method) in the state where the preform is not cooled to room temperature and heat retained in the preform due to injection molding (heat quantity) remains, for example. The manufacturing apparatus 100 that can perform a one-step method includes an injection molding unit 110, a temperature adjusting unit 120, a blow molding unit 130, and a removal unit 140, for example.

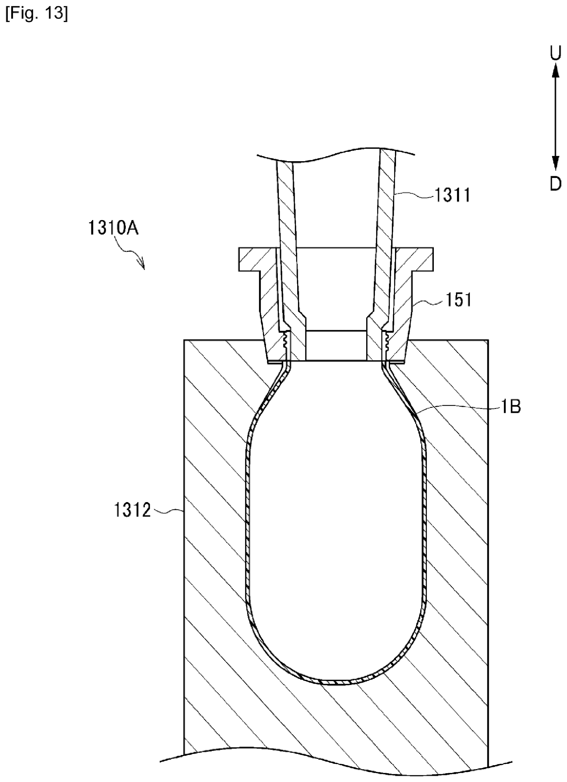

The injection molding unit 110 includes an injection cavity mold and an injection core mold not illustrated in the drawing. The injection cavity mold and the injection core mold constitute part of an injection cavity (molding space). By injecting molten resin from an injection device 111 into the injection cavity, a preform 1A for a resin container (see FIG. 13) is manufactured. Specifically, the injection molding unit 110 is configured to perform injection molding of the preform 1A.

The temperature adjusting unit 120 adjusts the preform 1A manufactured by the injection molding unit 110 to a temperature suitable for blow molding.

The blow molding unit 130 is configured to manufacture a resin container by performing preliminary blow molding and final blow molding of the preform 1A.

The removal unit 140 is configured to remove a resin container manufactured by the blow molding unit 130.

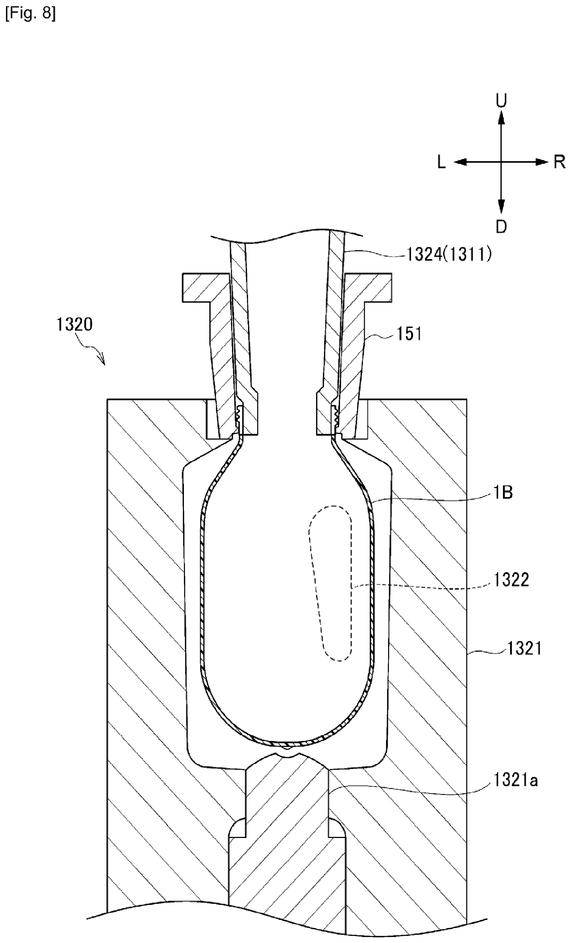

The injection molding unit 110, the temperature adjusting unit 120, the blow molding unit 130, and the removal unit 140 are provided at positions rotated by predetermined angles around a transport means 150. In the present embodiment, the predetermined angle is 90 degrees. The transport means 150 is composed of a rotation plate or the like, and a neck mold 151 (see FIG. 8) is attached to the rotation plate. The neck mold 151 is configured to grip the neck portion of the preform 1A and the neck portion 10 of the resin container 1.

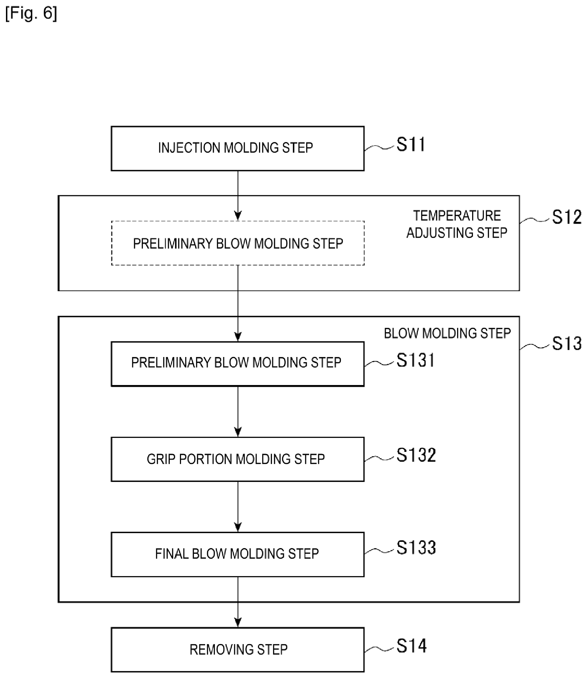

FIG. 6 is a diagram illustrating an example of a manufacturing method for the resin container 1. As exemplified in FIG. 6, the manufacturing method for the resin container 1 includes an injection molding step S11, a temperature adjusting step S12, a blow molding step S13, and a removing step S14.
In addition, the blow molding step S13 includes manufacturing the resin container 1 by performing blow molding of the preform 1A transported to the blow molding unit 130. The blow molding step S13 includes a preliminary blow molding step S131, a grip portion molding step S132, and a final blow molding step S133. The blow molding unit 130 includes a preliminary blow molding portion 1310 and a final blow molding portion 1320. Note that in the present embodiment, the blow molding unit 130 is configured such that the preliminary blow molding portion 1310 and the final blow molding portion 1320 are located at the same position. However, the blow molding unit 130 may also be configured to transport the preform 1A and the resin container 1 from the preliminary blow molding portion 1310 to the final blow molding portion 1320 located at a position different from the preliminary blow molding portion 1310.

The injection molding step S11 includes manufacturing the preform 1A by injection molding. At the injection molding step S11, an injection cavity (injection molding space) is formed by the neck mold 151, and an injection cavity mold and an injection core mold not illustrated in the drawing. The injection device 111 injects molten resin into the injection cavity. The injected molten resin is favorably cooled in the injection cavity to form the preform 1A. When the manufactured preform 1A is released from the injection cavity mold and the injection core mold, the preform 1A is transported by the transport means 150 to the temperature adjusting unit 120 while being held by the neck mold 151.

The temperature adjusting step S12 includes adjusting the preform 1A transported by the temperature adjusting unit 120 to a temperature suitable for blow molding. The preform 1A adjusted to a temperature suitable for blow molding is transported to the blow molding unit 130 by the transport means 150 while being held in the neck mold 151. The temperature adjusting unit 120 will be elaborated below.
Note that the grip portion molding step S132 and the final blow molding step S133 are performed on an intermediate molded body 1B (described below) in a state where air is introduced and internal pressure is applied thereto. The grip portion molding step S132 forms a resin film portion corresponding to the through space S by pressing it with a protruding portion (protruding member) 1322 of a final blow cavity mold 1321. The final blow molding step S133 forms a resin film portion corresponding to the through space S (a portion to be cut off, a flat plate portion P), and thereafter shapes it into a final container shape by introducing blow air.

At this time, if the intermediate molded body 1B has a low temperature, a portion near the pressed portion is likely to rupture during pressing or during introduction of blow air. In view of this, at the temperature adjusting step S12, the preform 1A is heated (temperature-adjusted) to a temperature considerably higher than a softening point or a glass transition temperature of the resin material (for example, to a temperature of 170°C to 220°C (a temperature near a melting point) in a case of a copolyester resin having a softening point of approximately 95°C to 110°C).

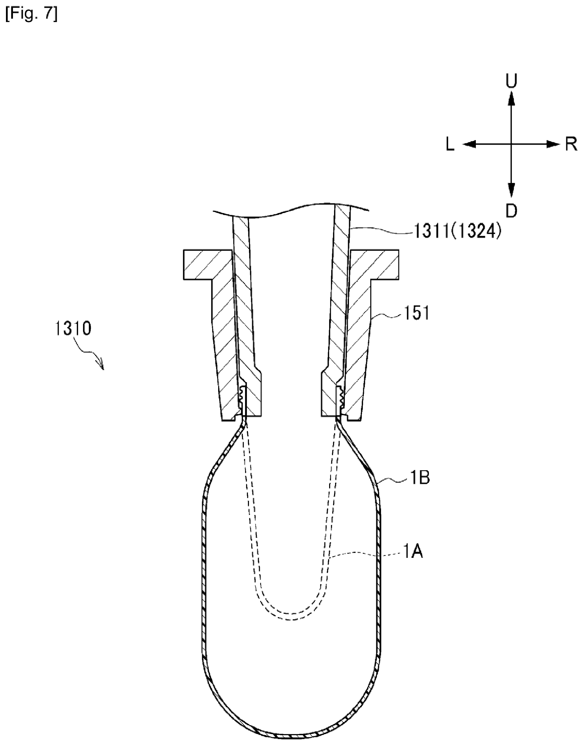

The preliminary blow molding step S131 is a step of manufacturing the intermediate molded body 1B by performing preliminary blow molding of the preform 1A transported to the blow molding unit 130. Note that in the present disclosure, the intermediate molded body 1B is an example of a preform. FIG. 7 is a diagram illustrating an example of the preliminary blow molding portion 1310 in the blow molding unit 130. Note that in FIG. 7, the shape of the preform 1A is indicated by a broken line. The preliminary blow molding portion 1310 includes a preliminary blow core mold 1311. The preliminary blow core mold 1311 may also serve as a blow core mold 1324 (described below). The preliminary blow core mold 1311 (1324) may be configured to introduce preliminary blow air into the preform 1A in the state where it is inserted into the neck portion of the preform 1A. The preliminary blow molding step S is performed in the state where a pair of the final blow cavity molds 1321 (described below) are opened. At the preliminary blow molding step S131, the preform 1A may be stretched in the vertical axis direction by inserting a stretch rod into the preform 1A, and pressing the inner surface of the bottom portion of the preform 1A during introduction of the preliminary blow air.

The preform 1A transported to the preliminary blow molding portion 1310 expands when preliminary blow air is blown from the neck portion of the preform 1A by the preliminary blow core mold 1311 (the preform 1A is subjected to biaxial stretch blow molding with preliminary blow air into a size smaller than the resin container 1), thereby forming the intermediate molded body 1B. The intermediate molded body 1B is subjected to a molding step described below (the grip portion molding step S132 and the final blow molding step S133) at the final blow molding portion 1320 of the blow molding unit 30 while being held in the neck mold 151.

The grip portion molding step S132 is a step of forming a portion serving as the grip portion 40 of the resin container 1 in the intermediate molded body 1B at the final blow molding portion 1320. FIG. 8 is a diagram illustrating an example of the final blow molding portion 1320. The final blow molding portion 1320 includes the final blow cavity mold 1321 and a bottom mold 1321a. The final blow cavity mold 1321 and the bottom mold 1321a are examples of a blow molding mold. The final blow cavity mold 1321 is configured to form a final blow cavity (blow molding space) together with the neck mold 151 and the bottom mold 1321a. The final blow cavity defines the external shape of the resin container 1. The final blow cavity mold 1321 is a pair of split molds configured to open toward the near side (the first direction) and the depth side in the drawing. Each split mold of the final blow cavity mold 1321 is provided with a protruding portion (a metal mold member (insert mold) extending to the near side and the depth side in the drawing) 1322 detachably provided to the blow cavity mold 1321. The protruding portion 1322 is formed to protrude to the inner side of the final blow cavity. Note that the temperature of the final blow cavity mold 1321 and the bottom mold 1321a is set to 10°C to 90°C. For example, the temperature of each metal mold may be set to 60°C to 80°C to, for example, reduce residual stress derived from injection molding in the resin container 1 (the intermediate molded body 1B), and thereby to increase the strength of the resin container 1. In addition, the temperature of each metal mold may be set to 10°C to 20°C to shorten the cooling time of the resin container 1. The protruding portion 1322 is desirably fixed to the final blow cavity mold 1321 so as not to be movable forward and backward, but may be configured to be movable forward and backward relative to the final blow cavity mold 1321 using an actuator. In addition, in the grip portion molding step S132, the stretch rod may remain inserted in the intermediate molded body 1B as in the preliminary blow molding step S131.

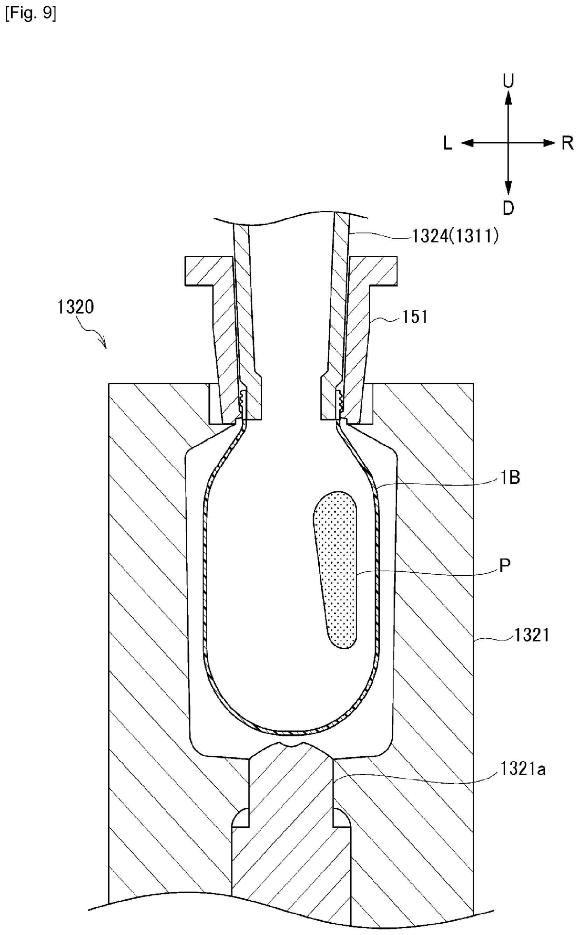

FIG. 9 is a diagram illustrating an example of the flat plate portion P formed by the protruding portion 1322 with the final blow cavity mold 1321 closed. The flat plate portion P is an example of a portion to be cut off. The protruding portions 1322 come close to each other and press the resin film of the intermediate molded body 1B, thereby forming the flat plate portion P. The flat plate portion P is formed into a hollow shape. The flat plate portion P is cut off in a post-processing (for example, a step after removal from the manufacturing apparatus 100 for the resin container 1) of the manufacturing processing for the resin container 1, thereby forming the through space S. In this manner, the protruding portion 1322 is configured to form the flat plate portion P. The tip end of the protruding portion 1322 forms the flat plate portion P (portion to be cut off).

FIG. 10 illustrates an example of an enlarged view of a tip end of the protruding portion 1322. As exemplified in FIG. 10, the protruding portion 1322 includes flat surface portions 1322a facing each other. The flat surface portions 1322a are configured to form the flat plate portion P by coming closer to each other and pressing the resin film of the intermediate molded body 1B.

In the flat surface portions 1322a, a cutting-edge portion 1322a1 is formed. The cutting-edge portion 1322a1 is formed to protrude from the flat surface portions 1322a toward the other protruding portion 1322. The cutting-edge portions 1322a1 formed in two protruding portions 1322 are configured to press the resin film of the intermediate molded body 1B and bring the resin film into contact with each other. Note that a gap may be provided between the cutting-edge portion 1322a1 facing each other. The gap is set within a range of 0.03 mm to 0.3 mm, or more preferably 0.05 mm to 0.20 mm, for example. This gap forms a thin portion, and the thick portion 50 and the flat plate portion P are connected through the thin portion.

The protruding portion 1322 further includes a thick portion formation portion 1322b. The thick portion formation portion 1322b is configured to define the external shape of the thick portion 50 of the resin container 1. The thick portion formation portion 1322b is provided at the side surface of the protruding portion 1322 and is configured to form the thick portion 50 at the connecting portion with the flat plate portion P (a portion adjacent to the cutting-edge portion 1322a1). The thick portion formation portion 1322b has a shape recessed from the side surface of the protruding portion 1322.

The thick portion formation portion 1322b may be formed such that the dimension in the thickness direction of the thick portion 50 is smaller than the dimension in the first direction.
Since the protruding portion 1322 is detachably fixed to a coupling portion L5 of the final blow cavity mold 1321, a predetermined gap (clearance) is formed at the coupling portion L5. With the gap of the coupling portion L5, a mark of the coupling portion L5 (a mark representing the boundary between the protruding portion 1322 and the final blow cavity mold 1321) is formed in the resin container 1. Two marks formed on the body portion 20 side are the first thick end portion 20A and the second thick end portion 20B, and the distance between them is the dimension L1 in the first direction (the width of the body thick portion 50a). Two marks formed on the grip portion 40 side are the third thick end portion 40A and the fourth thick end portion 40B, and the distance between them is the dimension L3 in the first direction (the width of the grip thick portion 50b).

In addition, in the case where the manufacturing apparatus 100 is capable of manufacturing the resin container 1001 according to the variation, the thick portion formation portion 1322b may be configured to form the thick portion 50A such that the thick portion 50A formed in a portion of the peripheral portion 60A as exemplified in FIG. 4 has a dimension different from that of the thick portion 50A formed in other portions in the peripheral portion 60A. For example, the thick portion formation portion 1322b is formed such that the dimension in the thickness direction of the thick portion 50 formed at the horizontal portion 61 is greater than the dimension in the thickness direction of the thick portion 50 formed at the vertical portion 62. In this case, the thick portion formation portion 1322b that forms the horizontal portion 61 may be recessed deeper from the side surface of the protruding portion 1322 than the thick portion formation portion 1322b that forms the vertical portion 62. Likewise, when it is desired to increase the thickness of only at least any of the body thick portion 50Aa, the grip thick portion 50Ab, or two horizontal thick portions 50Ac, the corresponding thick portion formation portion 1322b may be recessed deeper from the side surface of the protruding portion 1322 than other thick portion formation portions 1322b. Further, in the case where the thickness partially varies in each thick portion 50A of the body thick portion 50Aa, the grip thick portion 50Ab, and two horizontal thick portions 50Ac, the depth of the recess formed in the side surface of the protruding portion 1322 may partially vary in the corresponding thick portion formation portion 1322b.

The protruding portion 1322 further includes a heater not illustrated in the drawing. The heater adjusts the temperature of the resin such that the resin in contact with the protruding portion 1322 has a temperature higher than that of other portions. The heater may be provided inside or near the cutting-edge portion 1322a1.

When the flat plate portion P is formed as exemplified in FIG. 9, the process proceeds to the final blow molding step S133 with the intermediate molded body 1B kept accommodated inside the final blow cavity mold 1321.

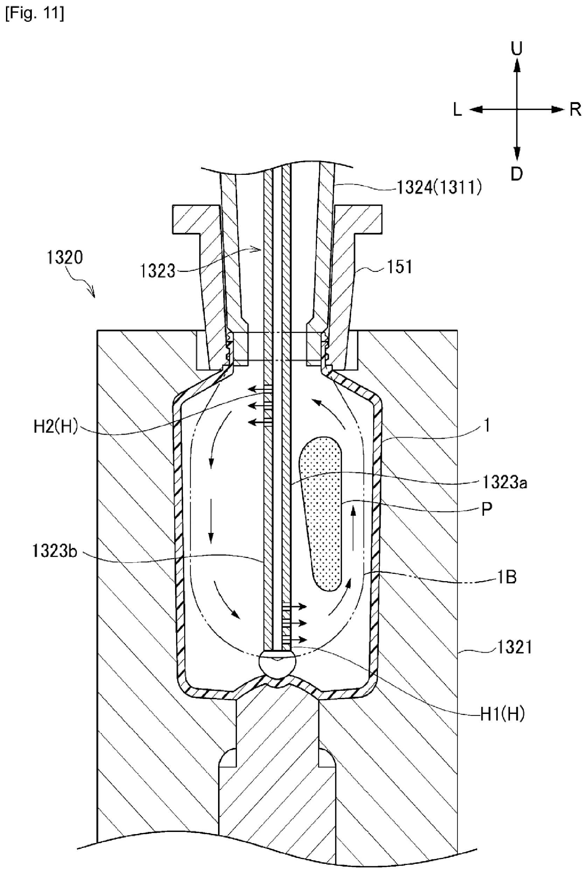

FIG. 11 is a diagram illustrating an example of the final blow molding portion 1320 where the final blow molding step S133 is performed. Note that in FIG. 11, an example of an external shape of the intermediate molded body 1B before final blow molding is indicated by a two-dotted line.

When final blow air at a higher pressure than the preliminary blow air is introduced into the intermediate molded body 1B with the final blow cavity mold 1321 closed, the intermediate molded body 1B is expanded to the shape defined by the final blow cavity (the intermediate molded body 1B is subjected to biaxial stretch blow molding into the final container shape), thereby forming the resin container 1. Also for a portion that makes contact with the protruding portion 1322, the shapes of the grip portion 40 and the body portion 20 on the through space S side are defined by the shape of the protruding portion 1322 when the final blow air is introduced into the intermediate molded body 1B. Further, the shapes of the shoulder 70, the bottom portion 30, and the body portion 20 located on the opposite side of the through space S are also defined by the shapes of the final blow cavity mold 1321 and the bottom mold 1321a. In addition, the inner surface of the bottom portion of the intermediate molded body 1B may be supported by a stretch rod to suppress positional displacement of the bottom center or of axial stretching.

The external shape of the thick portion 50 is defined in accordance with the shape of the thick portion formation portion 1322b. Since the thick portion formation portion 1322b has a shape recessed from the side surface of the protruding portion 1322, the thick portion 50 is formed by resin flowing into and accumulating in the thick portion formation portion 1322b. The thickness of the body portion 20 and the grip portion 40 where the thick portion 50 is formed is greater than the average thickness tm of the grip portion 40 and the average thickness of the body portion 20 on the through space S side. When the resin in contact with the protruding portion 1322 is heated by the heater of the protruding portion 1322, resin flows more readily during final blow molding, and thus the thick portion 50 can be formed more smoothly.

The resin container 1 manufactured by the final blow molding is transported to the removal unit 140 by the transport means 150, while being held by the neck mold 151. The resin container 1 transported to the removal unit 140 is released from the neck mold 151 at the removing step S14, and is then collected from the manufacturing apparatus 100. The neck mold 151 released from the resin container 1 is transported to the injection molding unit 110 by the transport means 150 again. Note that it is necessary to prevent the flat plate portion P from falling off the resin container 1 until the resin container 1 is removed from the manufacturing apparatus 100 at the removal unit 140. The blow molding unit 130 can prevent this because the resin container 1 can be manufactured in the state where the thick portion 50 (the peripheral portion 60) and the flat plate portion P are connected through a thin portion.

With the manufacturing apparatus 100 for the resin container 1 and the final blow cavity mold 1321, which is a blow molding mold, according to the present embodiment, the thick portion 50 protruding toward the inner side of the through space S is formed using the thick portion formation portion 1322b formed in the protruding portion 1322. Since the rigidity of the portion where the thick portion 50 is formed is high in the resin container 1, the body portion 20 and the grip portion 40 are less likely to deform. In this manner, the strength can be further increased in the resin container 1.

The protruding portion 1322 may be formed such that the dimension in the thickness direction of a thick portion formed at the horizontal portion 61 is greater than the dimension in the thickness direction of the thick portion 50 formed at the vertical portion 62. With the horizontal portion 61 thicker than the vertical portion 62, the rigidity of the resin container 1001 around the through space S can be further increased.

### Details of Final Blow Molding Portion

Next, with reference to FIG. 11, details of the final blow molding portion 1320 are described. As exemplified in FIG. 11, the final blow molding portion 1320 further includes a stretch rod 1323 and the blow core mold 1324.

The stretch rod 1323 is a hollow member configured to be displaceable in the up-down direction. At the final blow molding step S133, the stretch rod 1323 is inserted into the intermediate molded body 1B so as to make contact with the bottom portion of the intermediate molded body 1B and further displace downward such that the intermediate molded body 1B is stretched to have a height equal to that of the resin container 1.

The blow core mold 1324 is configured to be inserted to the neck portion of the intermediate molded body 1B so as to make contact with the inner surface of the neck portion. The blow core mold 1324 is configured to introduce final blow air into the intermediate molded body 1B in the state where it is inserted into the neck portion of the intermediate molded body 1B.
Blow air is introduced from the blow core mold 1324 into the intermediate molded body 1B, and thus the intermediate molded body 1B is molded into the shape of the resin container 1 as a final mold. At this time, shapes of the grip portion 40 and the body portion 20 on the through space S side are completely shaped.

The stretch rod 1323 is configured to be able to introduce cooling air into the resin container 1. An air hole H for discharging gas from the inside to the outside is formed in the outer surface of the stretch rod 1323. A plurality of the air holes H are formed, and disposed separately in two regions on the outer surface of the stretch rod 1323.

The outer surface of the stretch rod 1323 includes a first portion 1323a and a second portion 1323b. The first portion 1323a is a half surface of the stretch rod 1323 facing toward the grip portion 40 and formed by a cross section that is parallel to and passes through the central axis of the stretch rod 1323. The second portion 1323b is a half surface of the stretch rod 1323 facing away from the grip portion 40 and formed by a cross section that is parallel to and passes through the central axis of the stretch rod 1323.

The air hole H includes a first air hole H1 and a second air hole H2. The first air hole H1 is formed in a lower portion of a portion of the stretch rod 1323 that is inserted into the intermediate molded body 1B. The first air hole H1 may be formed below the lower end of the flat plate portion P. The second air hole H2 is formed in an upper portion of a portion of the stretch rod 1323 that is inserted into the intermediate molded body 1B. The second air hole H2 may be formed above the upper end of the flat plate portion P.

Desirably, the first air hole H1 is formed in only one of the first portion 1323a and the second portion 1323b, and the second air hole H2 is formed in only the other of the first portion 1323a and the second portion 1323b. In the present embodiment, the first air hole H1 is formed in the first portion 1323a, and the second air hole H2 is formed in the second portion 1323b. In the example illustrated in FIG. 11, since the grip portion 40 is located on the right side of the stretch rod 1323, the first air hole H1 faces the right side whereas the second air hole H2 faces the left side.

The stretch rod 1323 stretches the intermediate molded body 1B, and introduces cooling air into the intermediate molded body 1B and the shaped resin container 1.

In FIG. 11, a flow of air output from the stretch rod is indicated by arrows. The air from the first air hole H1 tends to be guided to the right side, and a portion thereof tends to pass through the inside of the grip portion and flow toward the upper part of the intermediate molded body 1B. The air reaching the upper part of the intermediate molded body 1B tends to flow to the left side.

At this time, the air from the second air hole H2 is introduced to the left side. Thus, the air introduced from the second air hole H2 is less likely to block the flow of air introduced from the first air hole H1.

Likewise, the air from the second air hole H2 tends to flow along the body portion wall surface of the intermediate molded body 1B toward the lower portion of the intermediate molded body 1B. The air reaching the lower portion of the intermediate molded body 1B tends to flow in an air-air direction.

At this time, the air from the first air hole H1 is introduced to the right side. Thus, the air introduced from the first air hole H1 is less likely to block the flow of air introduced from the second air hole H2.

In this manner, in the present embodiment, the stretch rod 1323 introduces air into the resin container such that cooling air circulates smoothly inside the resin container 1. With the cooling air circulating inside the resin container 1, the temperature of the resin container 1 can be quickly reduced.

Depending on material properties and container molding requirements, the preform 1A (or the intermediate molded body 1B) may be heated (temperature-adjusted) to a high temperature far higher than a softening point before blow molding (specifically, biaxial stretch blow molding), and the resin container 1 may be cooled to a temperature equal to or lower than the softening point after blow molding. For example, when manufacturing the resin container 1 in which the grip portion 40 is formed, the preform 1A is transported to the blow molding unit 130 at a higher temperature than when manufacturing the resin container 1 in which the grip portion 40 is not formed in order to increase weldability of the resin of a bonding portion (pinch-off portion) formed of bonded resin, such as the peripheral portion 60 of the through space S or the thick portion 50, and make the pinch-off portion less likely to peel off. After the resin container 1 including the flat plate portion P has been formed, it is necessary to reduce the temperature of the resin container 1 such that the resin container 1 has a temperature suitable for release from the final blow cavity mold 1321 and the bottom mold 1321a and for removal from the apparatus. In particular, the inner surface of the grip portion 40 is a portion that is not readily cooled, and it is necessary to efficiently cool the inner surface of the grip portion 40 in order to efficiently manufacture a favorable resin container 1.

As an example, when manufacturing the resin container 1 in which the grip portion 40 is not formed, the temperature of the preform 1A transported to the blow molding unit is 90°C to 100°C. When manufacturing the resin container 1 in which the grip portion 40 is formed, the temperature of the preform 1A transported to the blow molding unit is approximately 200°C.

In the case of a resin such as polycarbonate, which has a relatively high softening point and thus requires only a small difference from an appropriate blow molding temperature, the temperature of the resin may sufficiently decrease, even without introducing cooling air by the stretch rod, until the resin container 1 including the flat plate portion P is formed, and the temperature of the resin container 1 may decrease to a temperature range suitable for release from the final blow cavity mold 1321 and the bottom mold 1321a and for removal from the apparatus.

However, in the case of a copolyester resin, since the softening point is relatively low while an appropriate blow molding temperature is high (the appropriate blow molding temperature for the container of the present application is a narrow high-temperature range), more time is required for the temperature of the resin container 1 including the flat plate portion P to naturally decrease to a temperature range suitable for release from the final blow cavity mold 1321 and the bottom mold 1321a and for removal from the apparatus.

In the manufacturing apparatus 100 of the present embodiment, only one of the first air hole H1 and the second air hole H2 faces the grip portion 40, and the other of the first air hole H1 and the second air hole H2 faces away from the grip portion 40. In this manner, the air discharged from the first air hole H1 and the second air hole H2 flows and circulates through the interior of the grip portion 40, whereby the entirety of the resin container 1 can be cooled, and deformation of the resin container 1 removed from the manufacturing apparatus 100 due to residual heat can be suppressed.

In particular, since the resin of the thick portion 50, the peripheral portion 60, the flat plate portion P (portion to be cut off), and the thin portion can be appropriately cooled by circulation of cooling air of the stretch rod 1323, deformation and the like of portions around the flat plate portion P of the resin container 1 due to residual heat (the body portion 20 on the through space S side and the grip portion 40) are suppressed. In this manner, removal of the flat plate portion P (portion to be cut off) after the removing step S14 is appropriately performed.

Note that the shape of the stretch rod 1323 is not limited to the disclosure of the present embodiment as long as cooling of the entirety of the resin container 1 is sufficient. For example, the air holes H may be formed only in a lower portion of the stretch rod 1323, and may be formed over an entire circumference of the lower portion of the stretch rod 1323.

### Details of Temperature Adjusting Unit

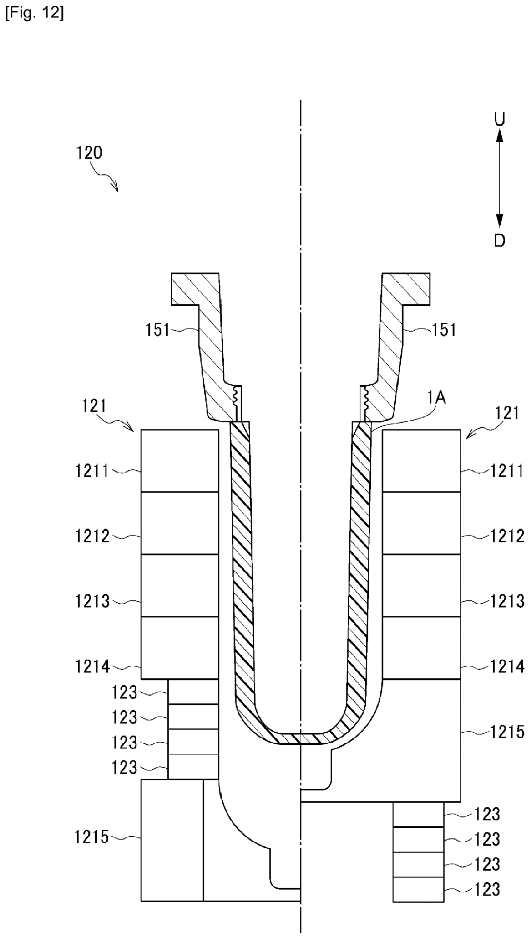

Next, with reference to FIG. 12, details of the temperature adjusting unit 120 are described. FIG. 12 is a diagram illustrating an example of the temperature adjusting unit 120. Note that FIG. 12 illustrates the temperature adjusting unit 120 in which usage states differ between a left half and a right half.

As exemplified in FIG. 12, the temperature adjusting unit 120 includes a temperature adjusting pot (heating pot) 121, which is a metal mold. The temperature adjusting pot 121 is formed so as to be capable of accommodating the preform 1A therein, and is provided so as to face the outer surface of the preform 1A accommodated therein. The temperature adjusting pot 121 is configured to adjust (heat), to a temperature suitable for the preliminary blow molding step S131, the grip portion molding step S132, and the final blow molding step S133 which include molding of the flat plate portion P (pinch-off portion), the temperature of the preform 1A in the state where it is not in contact with the preform 1A.

The temperature adjusting pot 121 can be divided into a plurality of portions from the upper side. In the present embodiment, the temperature adjusting pot 121 can be divided into five portions, for example. The five portions are referred to as, in the order from the upper side, a first body portion temperature adjusting portion 1211, a second body portion temperature adjusting portion 1212, a third body portion temperature adjusting portion 1213, a fourth body portion temperature adjusting portion 1214, and a bottom portion temperature adjusting portion 1215. The first body portion temperature adjusting portion 1211 to the fourth body portion temperature adjusting portion 1214 are provided above the bottom portion temperature adjusting portion 1215, and are provided to face the body portion of the preform 1A. The bottom portion temperature adjusting portion 1215 is provided to face the bottom portion of the preform 1A. The first body portion temperature adjusting portion 1211 to the fourth body portion temperature adjusting portion 1214 and the bottom portion temperature adjusting portion 1215 may be provided with a heater (not illustrated in the drawing) or the like for heating the preform 1A in a noncontact manner.

The bottom portion temperature adjusting portion 1215 is configured to be displaceable in the up-down direction with a spacer 123 inserted between the fourth body portion temperature adjusting portion 1214 and the bottom portion temperature adjusting portion 1215. The use state in the right half of FIG. 12 illustrates a case where the spacer 123 is not inserted between the fourth body portion temperature adjusting portion 1214 and the bottom portion temperature adjusting portion 1215. The use state in the left half of FIG. 12 illustrates a case where the spacer 123 is inserted between the fourth body portion temperature adjusting portion 1214 and the bottom portion temperature adjusting portion 1215.

In the case where the spacer 123 is inserted between the fourth body portion temperature adjusting portion 1214 and the bottom portion temperature adjusting portion 1215, the bottom portion temperature adjusting portion 1215 is located on the lower side than in the case where the spacer 123 is not inserted between the fourth body portion temperature adjusting portion 1214 and the bottom portion temperature adjusting portion 1215.

For adjustment of the temperature of the preform 1A by the temperature adjusting pot 121, it is desirable to perform heating while keeping the state where the temperature adjusting pot 121 and the preform 1A are not in contact with each other in order to set the preform 1A solidified for release from the metal mold of the injection molding unit to a temperature suitable for blow molding. However, in the case where the preform 1A is formed from a copolyester resin such as Tritan, the temperature of the preform 1A suitable for blow molding is close to the melting point of the resin material. In addition, the preform 1A needs to have a sufficiently high temperature in order to form the flat plate portion P (to favorably shape the pinch-off portion). In view of this, also at the temperature adjusting step S12 as a preceding step, the temperature is adjusted such that the preform 1A has a sufficiently high temperature. As a result, the preform 1A may elongate downward (draw down) under its own weight during the temperature adjusting step S12. As a result, even when the bottom portion of the preform 1A is not in contact with the bottom portion temperature adjusting portion 1215 at the start of the temperature adjusting step S12, it may make contact with the bottom portion temperature adjusting portion 1215 during the temperature adjusting step S12. The preform 1A that has made contact with the bottom portion temperature adjusting portion 1215 may no longer be molded into a favorable resin container 1 in the blow molding unit 130.

With the manufacturing apparatus 100 for the resin container 1 and the temperature adjusting pot 121 of the present embodiment, the bottom portion temperature adjusting portion 1215 is configured such that the distance to the fourth body portion temperature adjusting portion 1214 is changeable using the spacer 123, and thus it is easy to place the bottom portion temperature adjusting portion 1215 at a portion that suppresses the contact between the bottom portion of the preform 1A and the bottom portion temperature adjusting portion 1215.

Note that in the present embodiment, the spacer 123 can be divided into four blocks. In this manner, some of the four blocks of the spacer 123 may be inserted into the fourth body portion temperature adjusting portion 1214 and the bottom portion temperature adjusting portion 1215, and the remaining blocks may not be inserted between the fourth body portion temperature adjusting portion 1214 and the bottom portion temperature adjusting portion 1215. In this case, the distance between the fourth body portion temperature adjusting portion 1214 and the bottom portion temperature adjusting portion 1215 can be adjusted in a stepwise manner.

Hereinabove, the present disclosure has been described based on the embodiment. The present embodiment is merely an example of the present disclosure, and the present disclosure is not limited to the above-described embodiment, and may be freely modified and improved as appropriate. In addition, materials, shapes, dimensions, numerical values, modes, numbers, and arrangement locations of the respective constituent elements in the above-described embodiment are arbitrary as long as the present disclosure can be achieved, and are not limited.

In the present embodiment, at the preliminary blow molding step S131, preliminary blow molding is performed in a so-called free-blow state in which the external shape of the intermediate molded body 1B is not defined. However, the preliminary blow molding step S131 may be performed such that the external shape of the intermediate molded body 1B is defined. FIG. 13 is a diagram illustrating an example of a preliminary blow molding portion 1310A according to a variation. The preliminary blow molding portion 1310A includes the preliminary blow core mold 1311 and a preliminary blow cavity mold 1312. In this case, the preliminary blow molding step performed by the preliminary blow molding portion 1310A is performed with the preform 1A accommodated in the preliminary blow cavity mold 1312 such that the external shape of the intermediate molded body 1B is defined.

In addition, as exemplified in FIG. 6, the preliminary blow molding step S131 may be performed as a part of the temperature adjusting step S12. Specifically, the preliminary blow molding step S131 may be performed by the temperature adjusting unit 120. In this case, a preliminary blow cavity mold may be provided at the temperature adjusting unit, and instead of performing the preliminary blow molding step at the temperature adjusting step, the grip portion molding step and the final blow molding step may be performed at the blow molding step.

In the present embodiment, the preliminary blow molding portion 1310 that performs the preliminary blow molding step S131 and the final blow molding portion 1320 that performs the grip portion molding step S132 and the final blow molding step S133 are provided at the same position, but the preliminary blow molding portion 1310 and the final blow molding portion 1320 may be provided at different positions. For example, the resin container 1 may be manufactured by applying the configuration disclosed in JP 6952022 B in the manufacturing apparatus 100 such that the blow molding unit 130 is divided into a first blow molding unit that performs the preliminary blow molding step S131 and a second blow molding unit that performs the grip portion molding step S132 and the final blow molding step S133.
In addition, the manufacturing apparatus 100 for the resin container 1 is not limited to a hot parison (one-step) blow molding apparatus. For example, the resin container 1 may be manufactured using a cold parison (two-step) blow molding apparatus, such as that disclosed in US 7,727,454.

This application claims priority to Japanese Patent Application No. 2023-178497 filed on Oct. 16, 2023, and incorporates by reference all the contents described in the above-identified application.

### REFERENCE SIGNS LIST

1, 1001 Resin container
1A Preform
1B Intermediate mold
10 Neck portion
11 Screw portion
20 Body portion
20A First thick end portion
20B Second thick end portion
21 Inner surface
22 Outer surface
30 Bottom portion
40 Grip portion
40A Third thick end portion
40B Fourth thick end portion
41 Inner surface
42 Outer surface
50, 50A Thick portion
60, 60A Peripheral portion
61 Horizontal portion
62 Vertical portion
100 Manufacturing apparatus
110 Injection molding unit
111 Injection device
120 Temperature adjusting unit
121 Temperature adjusting pot
123 Spacer
130 Blow molding unit
140 Removal unit
150 Transport means
151 Neck mold
1211 First body portion temperature adjusting portion
1212 Second body portion temperature adjusting portion
1213 Third body portion temperature adjusting portion
1214 Fourth body portion temperature adjusting portion
1215 Bottom portion temperature adjusting portion
1310, 1310A Preliminary blow molding portion
1311 Preliminary blow core mold
1312 Preliminary blow cavity mold
1320 Final blow molding portion
1321 Final blow cavity mold
1321a Bottom mold
1322 Protruding portion
1322a Flat surface portion
1322a1 Cutting-edge portion
1322b Thick portion formation portion
1323 Stretch rod
1323a First portion
1323b Second portion
1324 Blow core mold
H Air hole
H1 First air hole
H2 Second air hole
IIA Enlarged view
P Flat plate portion
S Through space
S11 Injection molding step
S12 Temperature adjusting step
S13 Blow molding step
S14 Removing step
S131 Preliminary blow molding step
S132 Grip portion molding step
S133 Final blow molding step

## Claims

1. A resin container comprising:
a neck portion forming a liquid inlet/outlet portion;
a body portion connected to the neck portion;
a bottom portion connected to the body portion and configured to close a lower end of the body portion; and
a grip portion connected to the body portion and formed as a hollow body in communication with an interior of the body portion, wherein
the body portion and the grip portion form a through space extending through in a first direction that intersects a central axis of the resin container,
a thick portion having a thickness greater than an average thickness of the body portion and the grip portion is formed in at least a part of the through space in a circumferential direction in the body portion and the grip portion, and
the thick portion protrudes toward an inner side of the through space.

2. The resin container according to claim 1, wherein a dimension in a thickness direction of the thick portion is smaller than a dimension in the first direction.

3. The resin container according to claim 1 or 2, wherein as viewed from the first direction, the thick portion formed in a portion of a peripheral portion of the through space in the body portion and the grip portion has a dimension different from that of the thick portion formed in other portions in the peripheral portion.

4. The resin container according to any one of claims 1 to 3, wherein a resin forming the resin container is a copolyester resin.

5. A manufacturing apparatus for a resin container, the resin container including:
a neck portion forming a liquid inlet/outlet portion;
a body portion connected to the neck portion;
a bottom portion connected to the body portion and configured to close a lower end of the body portion; and
a grip portion connected to the body portion and formed as a hollow body in communication with an interior of the body portion, wherein
the body portion and the grip portion form a through space extending through in a first direction that intersects a central axis of the resin container,
a thick portion having a thickness greater than an average thickness of the body portion and the grip portion is formed in at least a part of the through space in a circumferential direction in the body portion and the grip portion, and
the thick portion protrudes toward an inner side of the through space, the manufacturing apparatus comprising:
a blow molding unit configured to perform blow molding of the resin container by performing biaxial stretch blow molding of a preform, wherein
the blow molding unit includes a blow molding mold configured to define an external shape of a resin container, the blow molding mold being a pair of split molds,
the blow molding mold includes a protruding portion configured to form a portion to be cut off that serves as the through space when the pair of split molds are brought closer to each other in the first direction and the portion to be cut off is cut off in the body portion and the grip portion, and
in the protruding portion, a thick portion formation portion configured to form the thick portion at a connecting portion with the portion to be cut off is formed.

6. The manufacturing apparatus for the resin container according to claim 5, wherein the thick portion formation portion is formed such that a dimension in a thickness direction of the thick portion is smaller than a dimension in the first direction.

7. The manufacturing apparatus for the resin container according to claim 5 or 6, wherein the protruding portion is formed such that as viewed from the first direction, the thick portion formed in a portion of a peripheral portion of the through space in the body portion and the grip portion has a dimension different from that of the thick portion formed in another portion in the peripheral portion.

8. The manufacturing apparatus for the resin container according to any one of claims 5 to 7, wherein
the blow molding unit further includes a stretch rod having a hollow shape and configured to be inserted into the preform to stretch the preform in a center axis direction,
an air hole configured to discharge gas from an inside to an outside is formed in an outer surface of the stretch rod,
the outer surface of the stretch rod includes a first portion facing the grip portion side, and a second portion facing away from the grip portion side,
the air hole includes a first air hole formed in a lower portion of a portion of the stretch rod inserted into the interior of the preform, and a second air hole formed in an upper portion of a portion of the stretch rod inserted into the interior of the preform, and
the first air hole is formed in only one of the first portion and the second portion, and the second air hole is formed in the other of the first portion and the second portion.

9. The manufacturing apparatus for the resin container according to any one of claims 5 to 8, further comprising:
a temperature adjusting section configured to adjust a temperature of the preform to a temperature suitable for blow molding, wherein
the temperature adjusting section includes a temperature adjusting pot provided to face an outer surface of the preform and configured to adjust the temperature of the preform,
the temperature adjusting pot includes a bottom portion temperature adjusting portion provided to face a bottom portion of the preform, and a body portion temperature adjusting portion provided above the bottom portion temperature adjusting portion to face a body portion of the preform, and
the bottom portion temperature adjusting portion is configured to be displaceable in an up-down direction when a spacer is inserted between the body portion temperature adjusting portion and the bottom portion temperature adjusting portion.

10. A blow molding mold provided in a blow molding apparatus configured to manufacture a resin container by performing blow molding of a preform made of a resin, the resin container including:
a neck portion forming a liquid inlet/outlet portion;
a body portion connected to the neck portion;
a bottom portion connected to the body portion and configured to close a lower end of the body portion; and
a grip portion connected to the body portion and formed as a hollow body in communication with an interior of the body portion, wherein
the body portion and the grip portion form a through space extending through in a first direction that intersects a central axis of the resin container,
a thick portion having a thickness greater than an average thickness of the body portion and the grip portion is formed in at least a part of the through space in a circumferential direction in the body portion and the grip portion, the thick portion protruding toward an inner side of the through space, and
the thick portion protrudes toward the inner side of the through space, wherein
the blow molding mold is a pair of split molds,
the blow molding mold includes a protruding portion configured to form a portion to be cut off that serves as the through space when the pair of metal molds are brought closer to each other in the first direction and the portion to be cut off is cut off in the body portion and the grip portion, and
in the protruding portion, a thick portion formation portion configured to form the thick portion at a connecting portion with the portion to be cut off is formed.

11. A temperature adjusting pot configured to adjust a temperature of a preform made of a resin to a temperature suitable for blow molding, the temperature adjusting pot comprising:
a bottom portion temperature adjusting portion provided to face a bottom portion of the preform, and
a body portion temperature adjusting portion provided above the bottom portion temperature adjusting portion to face a body portion of the preform, wherein
the bottom portion temperature adjusting portion is configured such that a distance to the body portion temperature adjusting portion is changeable when a spacer is inserted between the body portion temperature adjusting portion and the bottom portion temperature adjusting portion.

12. A manufacturing method for a resin container, the resin container including:
a neck portion forming a liquid inlet/outlet portion;
a body portion connected to the neck portion;
a bottom portion connected to the body portion and configured to close a lower end of the body portion; and
a grip portion connected to the body portion and formed as a hollow body in communication with an interior of the body portion, wherein
the body portion and the grip portion form a through space extending through in a first direction that intersects a central axis of the resin container,
a thick portion having a thickness greater than an average thickness of the body portion and the grip portion is formed in at least a part of the through space in a circumferential direction in the body portion and the grip portion, and
the thick portion protrudes toward an inner side of the through space, the manufacturing method comprising:
performing blow molding of a resin container by performing biaxial stretch blow molding of a preform, wherein
the performing blow molding is performed using a blow molding mold configured to define an external shape of a resin container, the blow molding mold being a pair of split molds,
the blow molding mold includes a protruding portion configured to form a portion to be cut off that serves as the through space when the pair of split molds are brought closer to each other in the first direction and the portion to be cut off is cut off in the body portion and the grip portion, and
in the protruding portion, a thick portion formation portion configured to form the thick portion at a connecting portion with the portion to be cut off is formed.
